(19) Europäisches Patentamt / European Patent Office / Office européen des brevets

(11) **EP 2 703 880 B1**

(12) **EUROPEAN PATENT SPECIFICATION**

(45) Date of publication and mention
of the grant of the patent:
**05.10.2016 Bulletin 2016/40**

(51) Int Cl.:
***G02F 1/1333*** (2006.01)

(21) Application number: **13182214.0**

(22) Date of filing: **29.08.2013**

(54) **Vertical alignment liquid crystal display panel with viewing angle compensation element, and liquid crystal display device**

Flüssigkristallanzeigetafel vertikaler Flüssigkristallausrichtung mit Sichtwinkelausgleichselement und Flüssigkristallanzeigevorrichtung

Panneau d'affichage à cristaux liquides à alignement vertical avec élément de compensation d'angle de visualisation, et dispositif d'affichage à cristaux liquides

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2012 CN 201220443909 U**

(43) Date of publication of application:
**05.03.2014 Bulletin 2014/10**

(73) Proprietor: **BOE Technology Group Co., Ltd.
Beijing 100015 (CN)**

(72) Inventor: **Zhao, Weili
100176 Beijing (CN)**

(74) Representative: **Klunker . Schmitt-Nilson . Hirsch
Patentanwälte
Destouchesstraße 68
80796 München (DE)**

(56) References cited:
**WO-A2-2007/141025      JP-A- 2009 053 614
KR-B1- 100 877 926      US-A1- 2003 169 391**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

Embodiments of the disclosure relate to a viewing angle compensation element, a VA-LCD (Vertical Alignment-Liquid Crystal Display) panel and an LCD (Liquid Crystal Display) device.

BACKGROUND

In the case of being not energized, a VA-LCD takes on a black state (i.e., dark state) at a normal view angle, namely a viewing angle perpendicular to a display surface, and may have the problem of light leakage at an oblique angle. The reasons of dark-state light leakage are as follows: on one hand, an upper polarizer and a lower polarizer are not orthogonal to each other for the oblique angle; and on the other hand, vertically aligned liquid crystals have the problem of in-plane retardation for the oblique angle. Dark-state light leakage is the main reason for a reduced contrast ratio and a poor viewing angle property of LCDs.

In order to solve the above problem, one or more first compensation films (positive A phase retardation compensation films) meeting the condition of $n_x > n_y = n_z$, one or more first compensation films (negative A phase retardation compensation films) meeting the condition of $n_x < n_y = n_z$, and one or more second compensation films (negative C phase retardation compensation films) meeting the condition of $n_x = n_y > n_z$ are adopted by those skilled in the art to reduce the dark-state light leakage of the VA-LCD, and here $n_x$ and $n_y$ represent the in-plane refractive index of the compensation films, and $n_z$ represents the thickness refractive index. However, the negative A phase retardation compensation films are difficult to achieve technically, and therefore a good compensation mode is needed under the condition of existing parameters of the compensation films.

US 2003/0169391 A1 discloses a liquid crystal display (LCD) device with a liquid crystal (LC) layer 11 taking on a roughly vertically aligned state in the black display state. First and second polarizing plates are placed with the transmission axes orthogonal to each other. In one embodiment, a first and second, respectively, phase plate with biaxial optical anisotropy for compensating part of thickness-direction retardation of the LC layer is placed between the LC layer and the first polarizing plate and the second polarizing plate, respectively. Further, a first and second, respectively, phase plate with negative uniaxial optical anisotropy for compensating the thickness-direction retardation of the LC layer is placed between the LC layer and the first and second, respectively, phase plate with biaxial optical anisotropy.

KR 100 877 926 B1 discloses a LCD with an upper 10' and a lower 10 polarizers and a vertical alignment (VA) LC cell 30 positioned between the polarizers 10', 10. The lower polarizer 10 is arranged in the backlight unit direction. A first phase difference film 20 located between one of the upper or the lower polarizer and the VA LC cell 30 has a negative C plate. A second phase difference film 20' positioned between the remaining polarizer and the VA LC cell 30 has negative biaxial plate.

JP 2009 053614 A discloses a LC panel 100 with a LC cell 20 between respective layered optical films 10 which include: a polarizer 11; a first optical compensation layer 12 in which refractive indexes shows the relation of nx>ny>nz and an in-plane retardation Re1(590) is 80 to 200 nm; and a second optical compensation layer 13 in which refractive indexes shows the relation of nx=ny>nz; wherein an angle between an absorption axis of the polarizer and a lagging axis of the first optical compensation axis is 30 to 60 degree and the retardation in the thickness direction of a layered body between the first optical compensation layer 12 and the second optical compensation layer 13 shows the relation of Rth(450)>Rth(550)>Rth(650).

SUMMARY

It is an object of the present invention to provide a VA-LCD panel with reduced dark-state light leakage so that contrast ratio and viewing angle property of the LCD can be improved.

The problem is solved by the features of the independent claim. Further embodiments and developments are defined in the dependent claims.

In one aspect, the disclosure provides a viewing angle compensation element applied to a VA-LCD panel. The VA-LCD panel comprises a liquid crystal cell and an upper polarizer and a lower polarizer which are respectively disposed on the upper side and the lower side of the liquid crystal cell. The viewing angle compensation element comprises a negative C phase retardation compensation film and a biaxial phase retardation compensation film, wherein the negative C phase retardation compensation film(s) is arranged between the liquid crystal cell and one of the upper polarizer and the lower polarizer, and the biaxial phase retardation compensation film is arranged between the liquid crystal cell and the lower polarizer.

In one example, the viewing angle compensation element further comprises a second biaxial phase retardation compensation film arranged between the liquid crystal cell and the upper polarizer.

In one example, the negative C phase retardation compensation film is arranged between the liquid crystal cell and the biaxial phase retardation compensation film.

In one example, the negative C phase retardation compensation film is arranged between the liquid crystal cell and the second biaxial phase retardation compensation film.

In one example, the biaxial phase retardation compensation film meets a condition of $N_z > 1$, where $N_z$ is a biaxial factor.

In one example, a slow axis of the biaxial phase retardation compensation film is orthogonal to an absorption axis of the lower polarizer.

In one example, the second biaxial phase retardation compensation film meets a condition of $N_z > 1$, where $N_z$ is a biaxial factor.

In one example, a slow axis of the second biaxial phase retardation compensation film is orthogonal to an absorption axis of the lower polarizer.

In one example, in the biaxial phase retardation compensation film, $n_x > n_y > n_z$.

In one example, the biaxial phase retardation compensation film meets conditions of $50nm \leq R_e \leq 200nm$.

In one example, in the second biaxial phase retardation compensation film, $n_x > n_y > n_z$.

In one example, the second biaxial phase retardation compensation film meets conditions of $50nm \leq R_e \leq 200nm$.

In one example, the negative C phase retardation compensation film meets a condition of $100nm \leq R_{th} \leq 400nm$.

In one example, the viewing angle compensation element further comprises a second negative C phase retardation compensation film arranged between the liquid crystal cell and the other of the upper polarizer and the lower polarizer.

In one example, the second negative C phase retardation compensation film meets a condition of $100nm \leq R_{th} \leq 400nm$.

In another aspect, the disclosure also provides a VA-LCD panel, which comprises a liquid crystal cell, an upper polarizer and a lower polarizer which are respectively disposed on the upper side and the lower side of the liquid crystal cell, and any one of the above-mentioned viewing angle compensation elements applied to the VA-LCD panel.

In still another aspect, the disclosure also provides an LCD device, which comprises a VA-LCD panel provided above.

Further scope of applicability of the present disclosure will become apparent from the detailed description given hereinafter. However, it should be understood that the detailed description and specific examples, while indicating preferred embodiments of the disclosure, are given by way of illustration only, since various changes and modifications of the disclosure will become apparent to those skilled in the art from the following detailed description.


BRIEF DESCRIPTION OF THE DRAWINGS

The present disclosure will become more fully understood from the detailed description given hereinafter and the accompanying drawings which are given by way of illustration only, and thus are not limitative of the present disclosure and wherein examples are not according to the invention, embodiments are according to the invention.


FIG 1 is a schematic structural view of a VA-LCD panel without compensation films;

FIG 2 is an optical simulation dark-state brightness distribution diagram of the VA-LCD panel without the compensation films;

FIG. 3 is a schematic structural view of a VA-LCD panel in an example 1 of the disclosure;

FIG 4 is a schematic structural view of a VA-LCD panel in an example 2 of the disclosure;

FIG 5 is an optical simulation dark-state brightness distribution diagram of the VA-LCD panel in the examples 1 and 2 of the disclosure.

FIG. 6 is a schematic structural view of a VA-LCD panel in an example 3 of the disclosure;

FIG 7 is an optical simulation dark-state brightness distribution diagram of the VA-LCD panel in the example 3 of the disclosure.

FIG 8 is a schematic structural view of a VA-LCD panel in an embodiment 1 of the disclosure;

FIG 9 is a schematic structural view of a VA-LCD panel in an embodiment 2 of the disclosure;

FIG 10 is an optical simulation dark-state brightness distribution diagram of the VA-LCD panel in the embodiments 1 and 2 of the disclosure.

FIG 11 is a schematic structural view of a VA-LCD panel in an example 4 of the disclosure; and

FIG 12 is an optical simulation dark-state brightness distribution diagram of the VA-LCD panel in the example 4 of the disclosure.

Reference Numerals

1: liquid crystal cell; 2: upper polarizer; 3: lower polarizer; 4: first negative C phase retardation compensation film; 5: first biaxial phase retardation compensation film; 6: second negative C phase retardation compensation film; 7: second biaxial phase retardation compensation film.

DETAILED DESCRIPTION

Further detailed description is given below to the specific implementations of the disclosure with the attached drawings and embodiments. The embodiments below are intended to illustrate the implementations of the disclosure and not to limit the scope of the disclosure.

Unless otherwise defined, the technical or scientific terminology used herein should have the same meaning as commonly understood by one of ordinary skill in the art to which this invention belongs. "First", "second" and the like used in specification and claims of the patent application of the invention do not show any order, number or importance, but are only used to distinguish different constituent parts. Likewise, the phrase such as "a," "an," "the" or the like does not indicate limitation in number, but specifies the presence of at least one. The phrase such as "comprise," "comprising," "include," "including", "contain" or the like means that an element or article ahead of this term encompasses element(s) or article(s) listed behind this term and its(their) equivalents, but does not preclude the presence of other elements or articles. The phrase such as "connection," "connected," or the like is not limited to physical or mechanical connection, but can include electrical connection, whether directly or indirectly. "Upper," "lower," "left," "right" or the like is only used to describe a relative positional relationship, and when the absolute position of a described object is changed, the relative positional relationship might also be changed accordingly.

A compensation film is a film with anisotropy in refractive index, namely refractive indexes $n_x$, $n_y$ and $n_z$ of the film in three directions that are orthogonal to each other are not completely identical, where $n_x$ represents the refractive index in the direction of an in-plane retardation axis of a biaxial phase retardation compensation film, $ny$ represents the refractive index in the direction perpendicular to the in-plane retardation axis of the biaxial phase retardation compensation film, and $n_z$ represents the refractive index in the direction perpendicular to a film plane of the biaxial phase retardation compensation film. At a normal view angle, the film does not have retardation so that the contrast ratio may not be affected. At an oblique view angle, the film can compensate the retardation of liquid crystals so that the light leakage can be reduced and the contrast ratio can be improved. The compensation films can be made of a film material with isotropy in refractive index, and for example can be obtained by the process of MD (Machine Direction) stretching, TD (Transverse Direction) stretching, or TD retraction on the material such as TAC, PMMA, PC, Acryl or the like. Therefore, the original material with isotropy in refractive index can possess anisotropy in refractive index according to different manufacturing processes. In a biaxial phase retardation compensation film, nx>ny>nz; and in a negative C compensation film, nx=ny>nz.

Examples 1 and 2

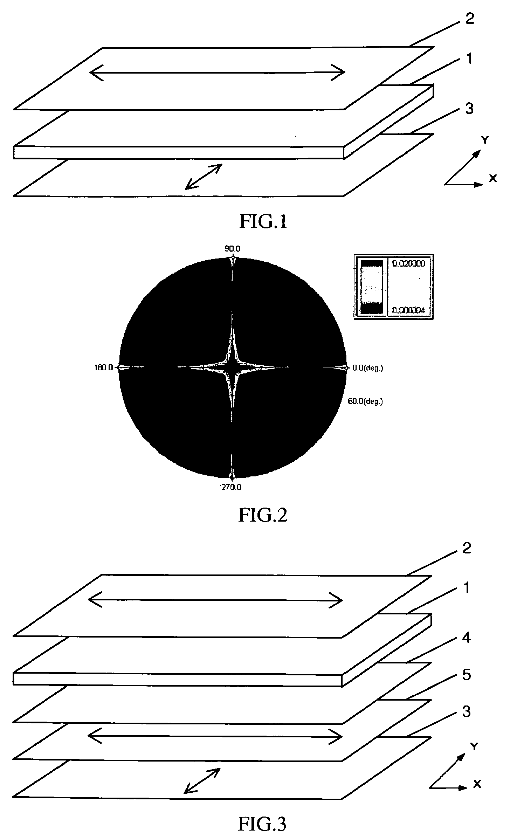

FIG 1 is a schematic structural view of a VA-LCD panel without compensation films. As illustrated in Fig. 1, an upper polarizer 2 and a lower polarizer 3 are respectively disposed on the upper side and the lower side of a liquid crystal cell 1, and absorption axes of the upper polarizer 2 and the lower polarizer 3 are orthogonal to each other. For example, the absorption axis of the lower polarizer 3 is at 90 degrees (Y-axis direction in the figure) and the absorption axis of the upper polarizer 2 is at 0 degree (X-axis direction in the figure). The liquid crystal cell 1 that is filled with positive or negative liquid crystals is arranged between the upper polarizer and the lower polarizer. For example, the pretilt angle $\theta$ of the liquid crystals is set to be between 89 and 90 degrees; the cell gap (thickness) of the liquid crystal cell 1 is between 3 and 5 micrometers; and the in-plane retardation at the wavelength of 550 nanometers is between 300 and 600 nanometers.

The liquid crystal cell 1, for instance, is formed by two substrates which are parallel to each other and cell-assembled together by sealant coated along the edges of the substrates. Spherical or post spacers may be distributed in the liquid crystal cell 1 so as to maintain the cell gap of the liquid crystal cell 1. The upper polarizer 1 and the lower polarizer 3 may be distributed inside or outside the substrates and usually disposed outside the substrates with respect to the liquid crystal cell 1.

The pretilt angles of the liquid crystals are controlled by alignment films formed on the substrates constituting the liquid crystal cell 1. The alignment films are subjected to a rubbing process so as to form multiple fine grooves on their surfaces or the alignment films of polymers are subjected to a photo alignment process to have their surfaces transformed into an ordered arrangement.

FIG 2 is an optical simulation dark-state brightness distribution diagram of the VA-LCD panel without the compensation films. As illustrated in FIG 2, the VD-LCD panel without the compensation films has serious problem of dark-state light leakage. In particular, the light intensity obtained by simulation at viewing angles of 45, 135, 225 and 315 degrees achieves the maximum of 8.51nit.

In the above example and the following embodiments and examples of the disclosure to be described, during the simulation, the initial alignment of liquid crystals is selected to be vertical alignment and the retardation of the liquid crystals is 485nm for the convenience of comparison. Due to the variation of optical parameters, it does not necessarily mean that the result obtained by optical simulation in the disclosure is that obtained in practice.

FIG 3 is a schematic structural view of a VA-LCD panel in the embodiment 1. As illustrated in FIG 3, a biaxial phase retardation compensation film and a negative C phase retardation compensation film are adopted for dark-state light leakage compensation. Absorption axes of an upper polarizer 2 and a lower polarizer 3 are orthogonal to each other. For example, the absorption axis of the lower polarizer 3 is at 90 degrees (Y-axis direction in the figure), and the absorption axis of the upper polarizer 2 is at 0 degree (X-axis direction in the figure). The liquid crystal cell 1 that is filled with positive or negative liquid crystals is arranged between the upper polarizer 2 and the lower polarizer 3. The pretilt angles θ of the liquid crystals are set to be between 89 and 90 degrees, and the cell gap (thickness) of the liquid crystal cell 1 is between 3 and 5 micrometers. Moreover, a first biaxial phase retardation compensation film 5 meeting the condition of $N_z > 1$ and a first negative C phase retardation compensation film 4 are arranged in order between the lower polarizer 3 and the liquid crystal cell 1, in which $N_z$ is a biaxial factor of the compensation film.

$$N_z = \frac{n_x - n_z}{n_x - n_y} = \frac{R_{th}}{R_e} + 0.5$$

The first negative C phase retardation compensation film 4 is disposed on the lower side of the liquid crystal cell 1, and a slow axis of the first biaxial phase retardation compensation film 5 is orthogonal to an absorption axis of the lower polarizer 3. In the first biaxial phase retardation compensation film 5, $n_x > n_y > n_z$. Moreover, the first biaxial phase retardation compensation film 5 meets the conditions of 50nm$\leq R_e \leq$200nm, where $R_t$ represents the in-plane retardation of the film plane for the biaxial phase retardation compensation film, and $R_{th}$ represents the thickness retardation of the biaxial phase retardation compensation film.

$$R_e = (n_x - n_y) \times d , \quad R_{th} = \left( \frac{n_x + n_y}{2} - n_z \right) \times d$$

where d represents the thickness of the compensation film. Furthermore, the first negative C phase retardation compensation film 4 meets the condition of 100nm$\leq R_{th} \leq$400nm.

As illustrated in FIG 3, the first negative C phase retardation compensation film 4 and the first biaxial phase retardation compensation film 5 are arranged on the lower side of the liquid crystal cell 1, and the first negative C phase retardation compensation film 4 is arranged between the liquid crystal cell 1 and the first biaxial phase retardation compensation film 5.

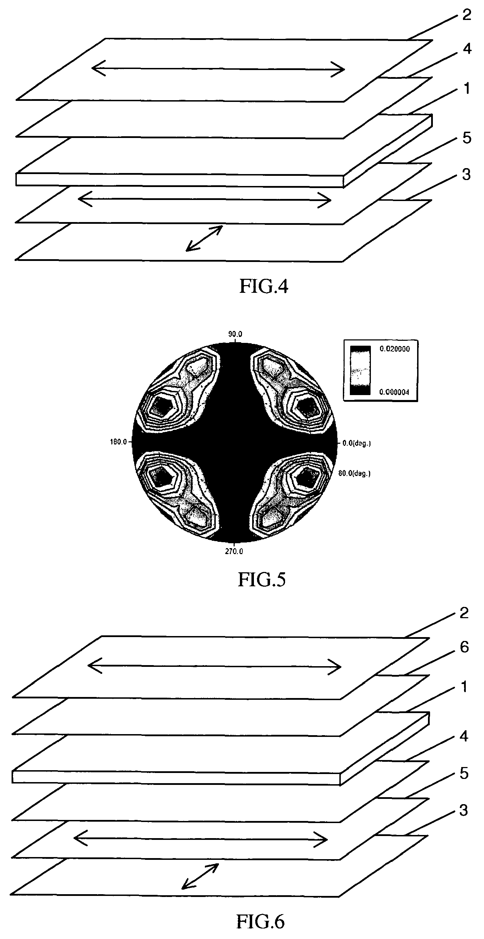

FIG. 4 is a schematic structural view of a VA-LCD panel in the example 2. As illustrated in FIG. 4, a biaxial phase retardation compensation film and a negative C phase retardation compensation film are also adopted for dark-state light leakage compensation. The differences of the structure as shown in FIG 4 from the structure of the example 1 as shown in FIG. 3 is as follows: the first negative C phase retardation compensation film 4 is disposed on the upper side of the liquid crystal cell 1, and the first biaxial phase retardation compensation film 5 is disposed on the upper side of the lower polarizer 3. Only the disposing positions of the first negative C phase retardation compensation film 4 and the first biaxial phase retardation compensation film 5 are changed, but the structural parameters thereof are the same as those of the example 1 in FIG. 3.

FIG 5 is an optical simulation dark-state brightness distribution diagram of the VA-LCD panel in the examples 1 and 2. As illustrated in FIG 5, the examples 1 and 2 have identical dark-state brightness distribution. The dark-state light leakage of the VA-LCD panel with one biaxial phase retardation compensation film and one negative C phase retardation compensation film is greatly improved. The light intensity obtained by simulation at the viewing angles of 45, 135, 225 and 315 degrees is 0.0192nit, so the light leakage is obviously reduced compared with the structure of the VA-LCD panel without the compensation films as shown in FIG 1.

Example 3

FIG 6 is a schematic structural view of a VA-LCD panel in the example 3. As illustrated in FIG 6, two negative C phase retardation compensation films and a biaxial phase retardation compensation film are adopted for dark-state light leakage compensation. The structure of the VA-LCD panel of this example is as follows: a second negative C phase retardation compensation film 6 is additionally arranged on the upper side of the liquid crystal cell 1 on the basis of the structure of the VA-LCD panel in the example 1 as shown in FIG 3. Both the structures and parameters of the liquid crystal cell 1, an upper polarizer 2, a lower polarizer 3, a first negative C phase retardation compensation film 4 and a first biaxial phase retardation compensation film 5 in the example are the same as those of the VA-LCD panel in the example 1 as shown in FIG 3. Moreover, the performance parameters of the second negative C phase retardation compensation film 6 are also the same as those of the first negative C phase retardation compensation film 4.

More specifically, as illustrated in FIG 6, the first negative C phase retardation compensation film 4 and the first biaxial phase retardation compensation film 5 are both arranged on the lower side of the liquid crystal cell 1, and the first negative C phase retardation compensation film 4 is arranged between the liquid crystal cell 1 and the first biaxial phase retardation compensation film 5.

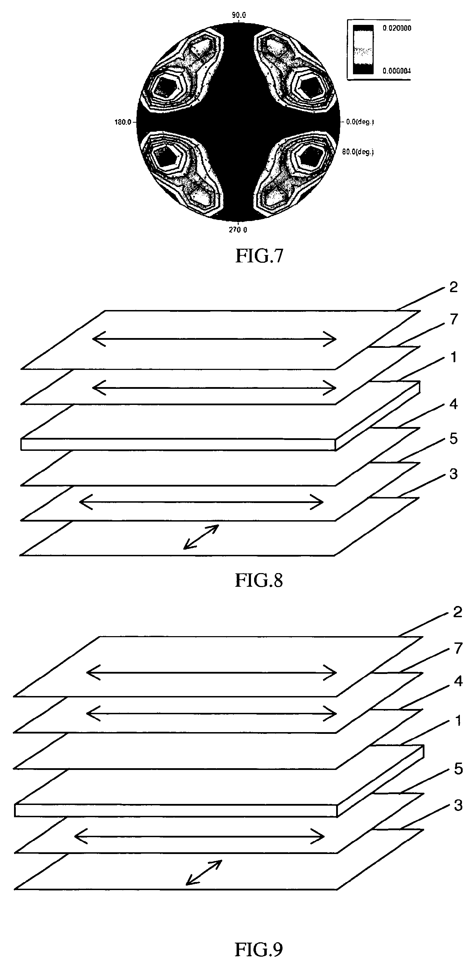

FIG 7 is an optical simulation dark-state brightness distribution diagram of the VA-LCD panel in the example 3. As illustrated in FIG 7, the dark-state light leakage of the VA-LCD panel with one biaxial phase retardation compensation film and two negative C phase retardation compensation film is greatly improved. The light intensity obtained by simulation at the viewing angles of 45, 135, 225 and 315 degrees is 0.0192nit, so the light leakage is obviously reduced compared with the structure of the VA-LCD panel without the compensation films as shown in FIG 1.

Embodiments 1 and 2.

FIG 8 is a schematic structural view of a VA-LCD panel in the embodiment 1. As illustrated in FIG 8, a negative C phase retardation compensation film and two biaxial phase retardation compensation films are adopted for dark-state light leakage compensation. The structure of the VA-LCD panel as shown in FIG 8 is as follows: a second biaxial phase retardation compensation film 7 is additionally arranged on the upper side of the liquid crystal cell 1 on the basis of the structure of the VA-LCD panel in the example 1 as shown in FIG 3. Both the structures and parameters of the liquid crystal cell 1, an upper polarizer 2, a lower polarizer 3, a first negative C phase retardation compensation film 4 and a first biaxial phase retardation compensation film 5 as shown in FIG 8 are the same as those of the VA-LCD panel in the example 1 as shown in FIG 3. Moreover, the performance parameters of the second biaxial phase retardation compensation film 7 are also the same as those of the first biaxial phase retardation compensation film 5, and a slow axis of the second biaxial phase retardation compensation film 7 is orthogonal to an absorption axis of the lower polarizer 3.

FIG 9 is a schematic structural view of a VA-LCD panel in the embodiment 2. As illustrated in FIG 9, a negative C phase retardation compensation film and two biaxial phase retardation compensation films are also adopted for dark-state light leakage compensation. The structure of the VA-LCD panel as shown in FIG 9 is as follows: a second biaxial phase retardation compensation film 7 is additionally arranged between an upper polarizer 2 and the first negative C phase retardation compensation film 4 on the basis of the structure of the VA-LCD panel in the example 2 as shown in FIG 4. Both the structures and parameters of a liquid crystal cell 1, the upper polarizer 2, a lower polarizer 3, the first negative C phase retardation compensation film 4 and a first biaxial phase retardation compensation film 5 are the same as those of the VA-LCD panel in the example 2 as shown in FIG. 4. Moreover, the performance parameters of the second biaxial phase retardation compensation film 7 are also the same as those of the first biaxial phase retardation compensation film 5, and a slow axis of the second biaxial phase retardation compensation film 7 is orthogonal to an absorption axis of the lower polarizer 3.

As illustrated in FIG 8, the first negative C phase retardation compensation film 4 and the first biaxial phase retardation compensation film 5 are arranged on the lower side of the liquid crystal cell 1 together, and the first negative C phase retardation compensation film 4 is arranged between the liquid crystal cell 1 and the first biaxial phase retardation compensation film 5. As illustrated in FIG 9, both the first negative C phase retardation compensation film 4 and the second axial phase retardation compensation film 7 are arranged on the upper side of the liquid crystal cell 1, and the first negative C phase retardation compensation film 4 is arranged between the liquid crystal cell 1 and the second biaxial phase retardation compensation film 7.

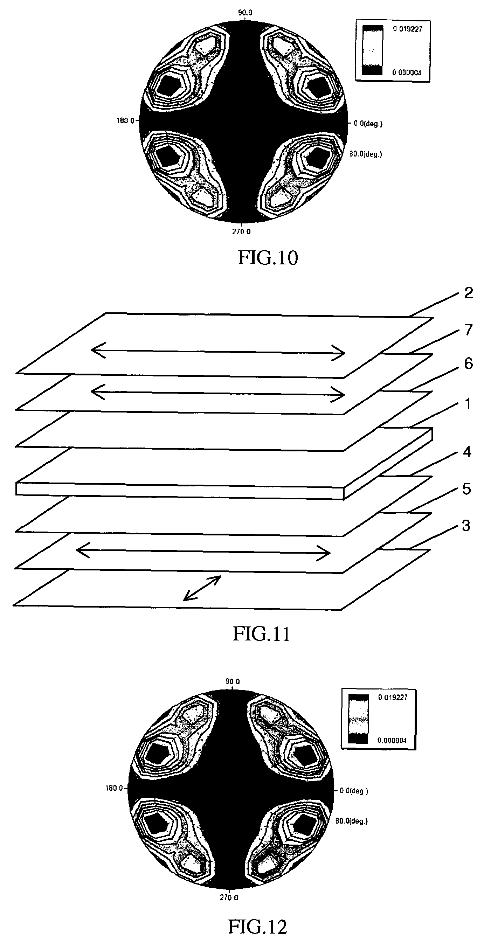

FIG 10 is an optical simulation dark-state brightness distribution diagram of the VA-LCD panel in the embodiments 1 and 2. As illustrated in FIG 10, the embodiments 1 and 2 have identical dark-state brightness distribution. The dark-state light leakage of the VA-LCD panel with two biaxial phase retardation compensation film and one negative C phase retardation compensation film is greatly improved. The light intensity obtained by simulation at the viewing angles of 45, 135, 225 and 315 degrees is 0.0284nit, so the light leakage is obviously reduced compared with the structure of the VA-LCD panel without the compensation films as shown in FIG 1.

Example 4

FIG 11 is a schematic structural view of a VA-LCD panel in the example 4. As illustrated in FIG 11, two negative C phase retardation compensation films and two biaxial phase retardation compensation films are adopted for dark-state light leakage compensation. The structure of the VA-LCD panel of the example may be improved on the basis of the structures of the VA-LCD panels in the example 3, and embodiments 1 and 2 respectively. On the basis of the structure of the example 3 as shown in FIG 6, a second biaxial phase retardation compensation film 7 is additionally arranged in this example between the upper polarizer 2 and the second negative C phase retardation compensation film 6. On the basis of the structure of the embodiment 1 as shown in FIG 8, the second negative C phase retardation compensation film 6 is additionally arranged in the example between the liquid crystal cell 1 and the second biaxial phase retardation compensation film 7. On the basis of the structure of the embodiment 2 as shown in FIG 9, another negative C phase retardation compensation film 4 is arranged in this example between the liquid crystal cell 1 and a first biaxial phase retardation compensation film 5. The performance parameters of the negative C phase retardation compensation films and the biaxial phase retardation compensation films in this example are completely identical to those of the above embodiments and examples.

As illustrated in FIG 11, the first negative C phase retardation compensation film 4 and the first biaxial phase retardation compensation film 5 are arranged on the lower side of the liquid crystal cell 1; the second negative C phase retardation compensation film 6 and the second biaxial phase retardation compensation film 7 are arranged on the upper side of the liquid crystal cell 1; the first negative C phase retardation compensation film 4 is arranged between the liquid crystal cell 1 and the first biaxial phase retardation compensation film 5; and the second negative C phase retardation compensation film 6 is arranged between the liquid crystal cell 1 and the second biaxial phase retardation compensation film 7.

FIG. 12 is an optical simulation dark-state brightness distribution diagram of the VA-LCD panel in the example 4. As illustrated in FIG 12, the dark-state light leakage of the VA-LCD panel with two biaxial phase retardation compensation films and two negative C phase retardation compensation films is greatly improved. The light intensity obtained by simulation at the viewing angles of 45, 135, 225 and 315 degrees is 0.0284nit, so the light leakage is obviously reduced compared with the structure of the VA-LCD panel without the compensation films as shown in FIG 1.

As seen from the above embodiments, the embodiments of the disclosure adopt the biaxial phase retardation compensation film(s) with the biaxial factor of more than 1 and the negative C phase retardation compensation film(s) to reduce the dark-state light leakage of the VA-LCD panel at an oblique view angle. The compensation mode can greatly reduce the dark-state light leakage, improves the contrast ratio and widens the viewing angle. Moreover, both the in-plane retardation and the thickness retardation of the compensation films adopted are within the current achievable range, so the compensation mode has strong feasibility and practical significance.

## Claims

1. A vertical alignment liquid crystal display panel, comprising a viewing angle compensation element, a liquid crystal cell (1) and an upper polarizer (2) and a lower polarizer (3) respectively disposed on an upper side and a lower side of the liquid crystal cell (1), the absorption axes of the upper polarizer (2) and the lower polarizer (3) being orthogonal to each other, the viewing angle compensation element comprising:

   a first biaxial phase retardation compensation film (5) arranged between the liquid crystal cell (1) and the lower polarizer (3); and
   a second biaxial phase retardation compensation film (7) arranged between the liquid crystal cell (1) and the upper polarizer (2);
   a negative C phase retardation compensation film (4) is arranged between the liquid crystal cell (1) and only one of the first biaxial phase retardation compensation film (5) and the second biaxial phase retardation compensation film (7); **characterized in that**

   the slow axis of the second biaxial phase retardation compensation film (7) is parallel to the slow axis of the first biaxial phase retardation compensation film (5), and the slow axis of the second biaxial phase retardation compensation film (7) is orthogonal to the absorption axis of the lower polarizer (3).

2. The vertical alignment-liquid crystal display panel according to claim 1, wherein the negative C phase retardation compensation film (4) is arranged between the liquid crystal cell (1) and the first biaxial phase retardation compensation film (5).

3. The vertical alignment-liquid crystal display panel according to claim 1, wherein the negative C phase retardation compensation film (4) is arranged between the liquid crystal cell (1) and the second biaxial phase retardation compensation film (7).

4. The vertical alignment-liquid crystal display panel according to any one of claims 1-3, wherein each of the first and second biaxial phase retardation compensation films meets a condition of $N_z > 1$, where $N_z$ is a biaxial factor.

5. The vertical alignment-liquid crystal display panel according to any one of claims 1-4, wherein in each of the first and second biaxial phase retardation compensation films, $n_x > n_y > n_z$, where $n_x$ represents a refractive index in the direction of an in-plane retardation axis of the biaxial phase retardation compensation film; $n_y$ represents a refractive index in the direction perpendicular to the in-plane retardation axis of the biaxial phase retardation compensation film; and $n_z$ represents a refractive index in the direction perpendicular to a film plane of the biaxial phase retardation compensation film.

6. The vertical alignment-liquid crystal display panel according to claim 5, wherein each of the first and second biaxial phase retardation compensation films meets conditions of $50nm \leq R_e \leq 200nm$, where $R_e$ represents in-plane retardation of the film plane for the biaxial phase retardation compensation film, and $R_{th}$ represents thickness retardation of the biaxial phase retardation compensation film.

7. The vertical alignment-liquid crystal display panel according to any one of claims 1-6, wherein the negative C phase retardation compensation film meets a condition of $100nm \leq R_{th} \leq 400nm$, where $R_{th}$ represents thickness retardation of the negative C phase retardation compensation film.

8. A liquid crystal display device, comprising the vertical alignment-liquid crystal display panel according to any one of claims 1-7.


**Patentansprüche**

1. Flüssigkristall-Anzeigefeld mit Vertikalausrichtung, aufweisend ein Blickwinkelkompensationselement, eine Flüssigkristallzelle (1) und einen oberen Polarisator (2) und einen unteren Polarisator (3), die jeweils an einer Oberseite und einer Unterseite der Flüssigkristallzelle (1) angeordnet sind, wobei die Absorptionsachsen des oberen Polarisators (2) und des unteren Polarisators (3) zueinander orthogonal sind, wobei das Blickwinkelkompensationselement aufweist:

   eine erste biaxiale Phasen-Verzögerungskompensationsdünnschicht (5), die zwischen der Flüssigkristallzelle (1) und dem unteren Polarisator (3) angeordnet ist; und
   eine zweite biaxiale Phasen-Verzögerungskompensationsdünnschicht (7), die zwischen der Flüssigkristallzelle (1) und dem oberen Polarisator (2) angeordnet ist;
   eine negative C-Phasen-Verzögerungskompensationsdünnschicht (4), die zwischen der Flüssigkristallzelle (1) und nur der ersten biaxialen Phasen-Verzögerungskompensationsdünnschicht (5) oder der zweiten biaxialen PhasenVerzögerungskompensationsdünnschicht (7) angeordnet ist;

   **dadurch gekennzeichnet, dass**
   die langsame Achse der zweiten biaxialen Phasen-Verzögerungskompensationsdünnschicht (7) parallel zu der langsamen Achse der ersten biaxialen Phasen-Verzögerungskompensationsdünnschicht (5) ist, und dass die langsame Achse der zweiten biaxialen Phasen-Verzögerungskompensationsdünnschicht (7) orthogonal zu der Absorptionsachse des unteren Polarisators (3) ist.

2. Flüssigkristall-Anzeigefeld mit Vertikalausrichtung gemäß Anspruch 1, wobei die negative C-Phasen-Verzögerungskompensationsdünnschicht (4) zwischen der Flüssigkristallzelle (1) und der ersten biaxialen Phasen-Verzögerungskompensationsdünnschicht (5) angeordnet ist.

3. Flüssigkristall-Anzeigefeld mit Vertikalausrichtung gemäß Anspruch 1, wobei die negative C-Phasen-Verzögerungskompensationsdünnschicht (4) zwischen der Flüssigkristallzelle (1) und der zweiten biaxialen Phasen-Verzögerungskompensationsdünnschicht (7) angeordnet ist.

4. Flüssigkristall-Anzeigefeld mit Vertikalausrichtung gemäß einem der vorhergehenden Ansprüche 1 bis 3, wobei sowohl die erste als auch die zweite biaxiale Phasen-Verzögerungskompensationsdünnschicht die Bedingung $N_z > 1$ erfüllt, wobei $N_z$ ein Biaxial-Faktor ist.

5. Flüssigkristall-Anzeigefeld mit Vertikalausrichtung gemäß einem der vorhergehenden Ansprüche 1 bis 4, wobei für sowohl die erste als auch die zweite biaxiale Phasen-Verzögerungskompensationsdünnschichten $n_x > n_y > n_z$ gilt,

wobei $n_x$ einen Refraktionsindex in der Richtung einer Verzögerungsachse in der Ebene der biaxialen Phasen-Verzögerungskompensationsdünnschicht repräsentiert; $n_y$ einen Refraktionsindex in der Richtung senkrecht zu der Verzögerungsachse in der Ebene der biaxialen Phasen-Verzögerungskompensationsdünnschicht repräsentiert; und $n_z$ einen Refraktionsindex in der Richtung senkrecht zu einer Dünnschichtebene der biaxialen Phasen-Verzögerungskompensationsdünnschicht repräsentiert.

6. Flüssigkristall-Anzeigefeld mit Vertikalausrichtung gemäß Anspruch 5, wobei sowohl die erste als auch die zweite biaxiale Phasen-Verzögerungskompensationsdünnschicht die Bedingungen erfüllen: $50nm \leq R_e \leq 200nm$, wobei $R_e$ eine Verzögerung in der Ebene der Dünnschicht für die biaxiale Phasen-Verzögerungskompensationsdünnschicht repräsentiert, und $R_{th}$ eine Verzögerung in der Dicke der biaxialen Phasen-Verzögerungskompensationsdünnschicht repräsentiert.

7. Flüssigkristall-Anzeigefeld mit Vertikalausrichtung gemäß einem der Ansprüche 1 bis 6, wobei die negative C-Phasen-Verzögerungskompensationsdünnschicht die Bedingung erfüllt: $100nm \leq R_{th} \leq 400nm$, wobei $R_{th}$ eine Dickenverzögerung der negativen C-Phasen-Verzögerungskompensationsdünnschicht repräsentiert.

8. Flüssigkristallanzeigevorrichtung aufweisend das Flüssigkristall-Anzeigefeld mit Vertikalausrichtung gemäß einem der Ansprüche 1 bis 7.

## Revendications

1. Panneau d'affichage à cristaux liquides à alignement vertical, comprenant un élément de compensation d'angle de vision, une cellule de cristaux liquides (1), et un polariseur supérieur (2) ainsi qu'un polariseur inférieur (3) disposés respectivement sur un côté supérieur et un côté inférieur de la cellule de cristaux liquides (1), les axes d'absorption du polariseur supérieur (2) et du polariseur inférieur (3) étant orthogonaux entre eux, l'élément de compensation d'angle de vision comprenant :

   un premier film de compensation à retardement de phase biaxial (5) agencé entre la cellule de cristaux liquides (1) et le polariseur inférieur (3), et
   un second film de compensation à retardement de phase biaxial (7) agencé entre la cellule de cristaux liquides (1) et le polariseur supérieur (2) ;
   un film de compensation à retardement de phase négative C (4) agencé entre la cellule de cristaux liquides (1) et un seul parmi le premier film de compensation à retardement de phase biaxial (5) et le second film de compensation à retardement de phase biaxial (7),

   **caractérisé en ce que**
   l'axe lent du second film de compensation à retardement de phase biaxial (7) est parallèle à l'axe lent du premier film de compensation à retardement de phase biaxial (5), et l'axe lent du second film de compensation à retardement de phase biaxial (7) est orthogonal à l'axe d'absorption du polariseur inférieur (3).

2. Panneau d'affichage à cristaux liquides à alignement vertical selon la revendication 1, dans lequel le film de compensation à retardement de phase négative C (4) est agencé entre la cellule de cristaux liquides (1) et le premier film de compensation à retardement de phase biaxial (5).

3. Panneau d'affichage à cristaux liquides à alignement vertical selon la revendication 1, dans lequel le film de compensation à retardement de phase négative C (4) est agencé entre la cellule de cristaux liquides (1) et le second film de compensation à retardement de phase biaxial (7).

4. Panneau d'affichage à cristaux liquides à alignement vertical selon l'une quelconque des revendications 1 à 3, dans lequel chacun des premier et second films de compensation à retardement de phase biaxiaux satisfait une condition telle que $N_z > 1$, où $N_z$ est un facteur biaxial.

5. Panneau d'affichage à cristaux liquides à alignement vertical selon l'une quelconque des revendications 1 à 4, dans lequel dans chacun des premier et second films de compensation à retardement de phase biaxiaux, $n_x > n_y > n_z$, où $n_x$ représente un indice de réfraction dans la direction d'un axe de retardement dans le plan du film de compensation à retardement de phase biaxial ; où $n_y$ représente un indice de réfraction dans la direction perpendiculaire à l'axe de retardement dans le plan du film de compensation à retardement de phase biaxial, et où $n_z$ représente un indice de réfraction dans la direction perpendiculaire à un plan de film du film de compensation à retardement de phase biaxial.

6. Panneau d'affichage à cristaux liquides à alignement vertical selon la revendication 5, dans lequel chacun des premier et second films de compensation à retardement de phase biaxiaux satisfait des conditions telles que de 50 nm $\leq R_e \leq$ 200 nm, où $R_e$ représente un retardement dans le plan du plan de film du film de compensation à retardement de phase biaxial, et $R_{th}$ représente un retardement d'épaisseur du film de compensation à retardement de phase.

7. Panneau d'affichage à cristaux liquides à alignement vertical selon l'une quelconque des revendications 1 à 6, dans lequel le film de compensation à retardement de phase négative C satisfait une condition telle que de 100 nm $\leq R_{th} \leq$ 200 nm, où $R_{th}$ représente un retardement d'épaisseur du film de compensation à retardement de phase négative C.

8. Dispositif d'affichage à cristaux liquides comprenant le panneau d'affichage à cristaux liquides à alignement vertical selon l'une quelconque des revendications 1 à 7.

FIG.1

FIG.2

FIG.3

FIG.4

FIG.5

FIG.6

FIG.7

FIG.8

FIG.9

EP 2 703 880 B1

FIG.10

FIG.11

FIG.12

14

**EP 2 703 880 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030169391 A1
- KR 100877926 B1

- JP 2009053614 A

15